# EUROPEAN PATENT APPLICATION

(11) **EP 4 667 133 A1**
(43) Date of publication of application: **24.12.2025**
(21) Application number: 24803337.5
(22) Date of filing: 15.04.2024
(51) Int. Cl.: B22D 11/10, B22D 41/50

(54) **NOZZLE FOR CONTINUOUS CASTING, CONTINUOUS CASTING APPARATUS, TUNDISH, AND CONTINUOUS CASTING METHOD**

(30) Priority: 10.05.2023 JP 2023077841
(71) Applicant: JFE Steel Corporation, Tokyo 100-0011 (JP)
(72) Inventor: FURUMAI Kohei, Tokyo 100-0011 (JP); ARAMAKI Norichika, Tokyo 100-0011 (JP)
(74) Representative: Grünecker Patent- und Rechtsanwälte PartG mbB
(86) International application number: PCT/JP2024/014985
(87) International publication number: WO 2024/232222

(57) **Abstract**

Provided is a nozzle for continuous casting configured to reduce slag inclusion, reduce the occurrence of operational problems, and reduce deterioration in the yield of the molten steel. Also provided are a continuous casting apparatus, a tundish, and a continuous casting method.

A nozzle 1 for continuous casting that is used for pouring molten steel from a ladle into a tundish 2 includes: an immersion portion 3 that is to be immersed into the molten steel in the tundish 2; a bottom opening 5 formed in a forward end portion of the immersion portion 3, the forward end portion being located on a bottom side 4 of the tundish 2, the bottom opening 5 being configured to discharge the molten steel in a central axis direction of the immersion portion 3; and at least one side opening 6 formed on the side surface of the immersion portion 3. The side opening 6 is formed so as to be inclined downward at a predetermined angle with respect to a horizontal plane at 0°, and the total area S of the opening area of the bottom opening 5 and the opening area of the side opening 6 is 0.02 m² or more and 0.15 m² or less.

## Description

### Technical Field

The present invention relates to a nozzle for continuous casting, a continuous casting apparatus, a tundish, and a continuous casting method.

### Background Art

High workability and good surface properties are required for ultralow-carbon steel sheets for automobile body panels, low-carbon aluminum killed steel sheets for low-carbon tin-plated steel sheets for cans, hot-rolled steel sheets for steel pipes, and high-tensile steel sheets used for automobile structural components etc. Major challenges in achieving high workability and good surface properties include surface defects and internal defects containing non-metallic inclusions (i.e., slag) in the steel. Therefore, when high workability and products with good surface properties are required, it is necessary to remove slag from molten steel used as the raw material for producing high-tensile steel in order to improve the cleanliness of the molten steel. In conventional tundishes, to allow the slag to float so that it can be removed, weirs and dams are provided to form upward flows of the molten steel, or an electromagnetic brake is used in a continuous casting mold to control the discharge flow from an immersion nozzle. However, with the above methods, it is difficult to remove the slag from the molten steel sufficiently, so that the slag may be mixed into final products, that is, high-tensile steel sheets (thin steel sheets). Therefore, techniques for removing slag more effectively have been studied.

For example, in a tundish described in Patent Literature 1, a recessed portion is formed in a region on which the flow of poured molten steel impinges. The depth of the recessed portion is set such that, when the flow of the poured molten steel impinges on the bottom of the recessed portion and a reverse flow with its flow direction reversed is formed, the reverse flow does not cause slag inclusion. It is stated that the occurrence of slag inclusion in the tundish is thereby prevented and the floatability of the slag in the tundish can be improved.

Patent Literature 2 describes a molten metal pouring method in which the upward flow of molten steel is generated in a tundish to allow the slag to float upward in the tundish effectively. Specifically, the forward end of a long nozzle used to pour the molten steel into the tundish is closed, and side holes passing through the outer circumferential surface of the long nozzle in the thickness direction are formed. By discharging the molten steel from the side holes, the upward flow of the molten steel is generated within the tundish to allow the slag to float upward within the tundish effectively.

Patent Literature 3 describes a long nozzle having a closed forward end similar to the long nozzle in Patent Literature 2. This long nozzle has upward discharge ports formed so as to pass through its outer circumferential surface in the thickness direction and inclined upward with respect to the horizontal. It is stated that, by discharging the molten steel upward from the discharge ports, the residence time of the molten metal in the tundish can be increased and the floatation of the slag can be facilitated.

Patent Literature 4 describes a long nozzle having a closed forward end similar to the long nozzle in Patent Literature 2. The long nozzle has an opening formed so as to pass through its outer circumferential surface in the thickness direction and configured to discharge molten steel upward at a discharge angle of 50° or more and 60° or less with respect to the horizontal. It is stated that the time sufficient to allow the slag in the molten steel to float upward within the tundish can be ensured.

### Citation List

### Patent Literature

PTL 1: Japanese Unexamined Patent Application Publication No. 4-344854
PTL 2: Japanese Unexamined Patent Application Publication No. 59-183960
PTL 3: Japanese Unexamined Patent Application Publication No. 5-200507
PTL 4: Japanese Unexamined Patent Application Publication No. 7-155911

### Summary of Invention

### Technical Problem

When the recessed portion is formed in the bottom portion of the tundish as described in Patent Literature 1, the amount of the molten steel remaining in the tundish after continuous casting is large. This results in a reduction in yield of the molten steel. Therefore, there is room for improvement in yield and production cost in real production processes.

When the long nozzle described in one of Patent Literature 2 to Patent Literature 4 is used to start the pouring of molten steel from a ladle into the tundish, the molten steel with high ferrostatic pressure and large momentum drops onto the forward end of the long nozzle. The impact force generated when the dropped molten steel impinges on the forward end may damage or break the long nozzle, potentially causing a problem in which fragments of the long nozzle are mixed into the molten steel in the tundish. The long nozzle is held in a lower portion of the ladle using holding means. Therefore, if the impact force exceeds the holding force for holing the long nozzle, a gap may be formed between the long nozzle and the lower portion of the ladle, and this may cause leakage of the molten steel from the gap. When the long nozzle described in one of Patent Literature 2 to Patent Literature 4 is used as described above, an operational problem may occur, and further improvements are necessary for practical application.

In the long nozzles described in Patent Literature 2 to Patent Literature 4, the molten steel is discharged upward with respect to the horizontal. Therefore, the upward flow of the discharged molten steel causes the molten steel to be stirred and mixed with the slag floating on the surface of the molten steel in the tundish, potentially resulting in slag inclusion, that is, entrainment of the slag into the molten steel. When slag inclusion occurs, the slag may be mixed into a high-tensile steel sheet used as a final product.

The present invention has been made to solve the foregoing problems, and has an object to provide a nozzle for continuous casting configured to reduce slag inclusion, reduce the occurrence of operational problems, and reduce deterioration in the yield of the molten steel and to provide a continuous casting apparatus, a tundish, and a continuous casting method.

### Solution to Problem

Means for solving the above problems is as follows.
[1] A nozzle for continuous casting that is used to pour molten steel from a ladle into a tundish, the nozzle including: an immersion portion that is to be immersed into the molten steel in the tundish; a bottom opening formed in a forward end portion of the immersion portion, the forward end portion being located on a bottom side of the tundish, the bottom opening being configured to discharge the molten steel in a central axis direction of the immersion portion; and at least one side opening formed on a side surface of the immersion portion, wherein the side opening is formed so as to be inclined downward at a predetermined angle with respect to a horizontal plane at 0°, and wherein a total area S of an opening area of the bottom opening and an opening area of the side opening is 0.02 m² or more and 0.15 m² or less.
[2] The nozzle for continuous casting according to [1], wherein the predetermined angle is 40° or more and 70° or less with respect to the horizontal plane.
[3] The nozzle for continuous casting according to [1], wherein the immersion portion is formed into a cylindrical shape, and wherein the at least one side opening includes two side openings formed at equal intervals in a circumferential direction of the immersion portion.
[4] A continuous casting apparatus including the nozzle for continuous casting according to any of [1] to [3], wherein the continuous casting apparatus further includes a dam disposed at a projection position where the bottom opening is projected onto a bottom of the tundish with respect to a height direction of the tundish, and wherein the dam includes a wall portion surrounding the projection position with a predetermined spacing between the wall portion and the projection position and an overhang provided in an upper end portion of the wall portion and protruding toward an inner side of the dam.
[5] A tundish into which molten steel is to be poured through the nozzle for continuous casting according to any of [1] to [3], the tundish including a dam disposed at a projection position where the bottom opening is projected onto a bottom of the tundish with respect to a height direction, wherein the dam includes a wall portion surrounding the projection position with a predetermined spacing between the wall portion and the projection position and an overhang provided in an upper end portion of the wall portion and protruding toward an inner side of the dam.
[6] A continuous casting method for producing steel using the nozzle for continuous casting according to any of [1] to [3].
[7] The continuous casting method according to [6], wherein a molten steel pouring amount per unit opening area Q/S that is obtained by dividing the molten steel pouring amount Q from the ladle to the tundish by the total area S is 20 (ton/min)/m² or more and 750 (ton/min)/m² or less.

### Advantageous Effects of Invention

According to the present invention, slag inclusion can be reduced, and the occurrence of operational problems can be reduced. Moreover, deterioration in the yield of molten steel can be reduced.

### Brief Description of Drawings

[Fig. 1] Illustration showing a nozzle according to an embodiment and part of a continuous casting apparatus to which the nozzle is applied.
[Fig. 2] Illustrations showing nozzles used in Example 1.
[Fig. 3] Graph showing the results of surface flow velocity measurement in Inventive Examples 1 to 3 and Comparative Example 1.
[Fig. 4] Graph showing the relation between the total area and the number density of inclusions in a slab.
[Fig. 5] Graph showing the relation between the flow rate of molten steel per unit opening area and the number density of inclusions in a slab.
[Fig. 6] Graph showing the number density of surface cracks in a cast slab produced using a nozzle in the embodiment of the invention.

### Description of Embodiments

The present invention will next be specifically described by way of an embodiment of the invention (which is hereinafter referred to as the present embodiment). The embodiment described below shows preferred examples of the invention, and the invention is not limited to these examples.

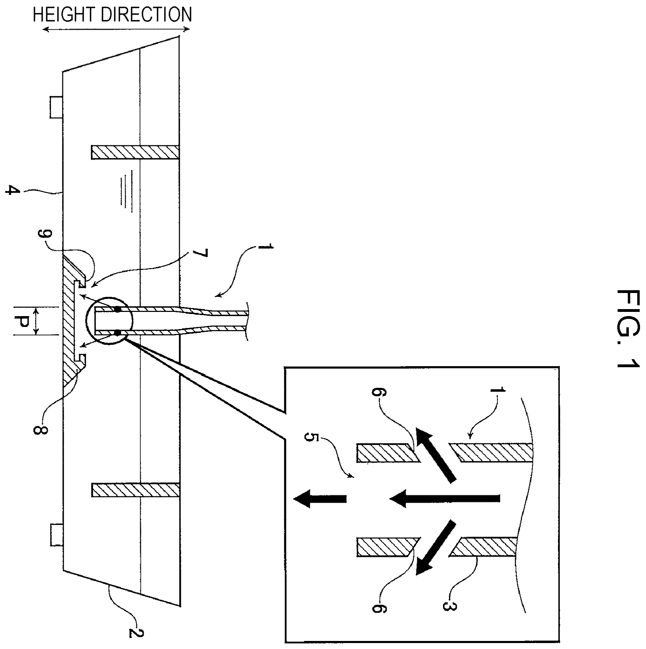

A nozzle for continuous casting (hereinafter referred to as a nozzle) according to the present embodiment is configured such that, while a state in which slag floats on the upper surface of molten steel is maintained, a discharge flow of the molten steel discharged from the nozzle is used to stir the molten steel within the tundish to thereby facilitate the floating movement of the slag in the molten steel. Fig. 1 is an illustration showing the nozzle in the present embodiment and part of a continuous casting apparatus to which the nozzle is applied. The nozzle 1 shown in Fig. 1 is a nozzle sometimes referred to as a long nozzle and is attached to an unillustrated ladle and configured such that the molten steel received in the ladle is poured into a tundish 2. The tundish 2 is used to temporarily store the molten steel poured through the nozzle 1 and to remove the slag floating on the molten steel. The nozzle 1 extends in a direction substantially parallel to the height direction of the tundish 2. The nozzle 1 is formed of a refractory material into a cylindrical shape, and the inner diameter of its forward end is set to about 220 mm. Preferably, an antioxidant, for example, is applied to the inner and outer circumferential surfaces of the nozzle 1.

The forward end portion of the nozzle 1 is an immersion portion 3 that is to be immersed in the molten steel stored in the tundish 2. The immersion portion 3 has a bottom opening 5 formed on the bottom 4 side of the tundish 2 and used to discharge the molten steel in the central axis direction of the nozzle 1. Specifically, the nozzle 1 communicates along the central axis direction or is open. The opening diameter of the bottom opening 5 shown in Fig. 1 is set to be substantially the same as the inner diameter of the immersion portion 3. This is to prevent the molten steel from colliding with the inner wall surface of the nozzle 1 when the pouring of the molten steel into the tundish 2 is started and to ensure that the molten steel is poured into the tundish 2.

At least one side opening 6 is formed so as to pass through the side surface of the immersion portion 3 in its thickness direction. In the present embodiment, two side openings 6 are formed at equal intervals in the circumferential direction of the immersion portion 3. The side openings 6 formed are inclined downward preferably in an angle range of 40° or more and 70° or less with respect to a horizontal plane at 0° and more preferably at an angle of about 60° with respect to the horizontal plane. This is because of the following reasons. If the angle described above is less than 40°, the discharge flow of the molten steel discharged from the side openings 6 causes the flow velocity of the molten steel staying inside the tundish 2 and flowing near the surface (this flow velocity is hereinafter referred to as the surface flow velocity) to increase. In this case, the slag floating on the upper surface of the molten steel is stirred and mixed into the molten steel, and slag inclusion may occur. The above angle range is set in order to prevent this phenomenon. If the angle described above exceeds 70°, the discharge flow of the molten steel discharged from the side openings 6 collides with the bottom 4 of the tundish 2, and a reverse flow with a reversed flow direction is formed. This reverse flow then flows toward the surface of the molten steel, causing an increase in the surface flow velocity. In this case, slag inclusion may occur, and the above angle range is set in order to prevent this phenomenon. The angle range for the formation of the side openings 6 can be rephrased as the range of the discharge angle of the molten steel discharged from the side openings 6.

By forming the side openings 6 such that the angle range described above is satisfied, slag inclusion can be reduced even under high throughput conditions, and steel with high cleanliness can be produced. The high throughput conditions mean that the amount of the molten steel poured from the nozzle 1 into the tundish 2 is about the prescribed maximum design pouring amount. Moreover, by increasing the number of side openings 6 formed in the nozzle 1, the discharge flow of the molten steel discharged from one side opening 6 can be reduced, so that the surface flow velocity in the tundish 2 can be reduced.

The total area S (m²) of the opening area of the bottom opening 5 and the opening area of the side openings 6 is preferably set to be 0.02 m² or more and 0.15 m² or less, and the details will be described below. If the total area S (m²) is less than 0.02 m², the flow velocity of the molten steel discharged from the bottom opening 5 and the side openings 6 increases. In this case, the surface flow velocity increases accordingly, and the slag inclusion may occur. The total area S is set in the above range in order to prevent this phenomenon. If the total area S (m²) exceeds 0.15 m², the upward flow velocity within the tundish 2, that is, the flow velocity of the molten steel that acts to stir the molten steel within the tundish 2, decreases. In this case, the slag in the molten steel does not easily float upward. The total area S is set in the above range in order to prevent this phenomenon.

Preferably, the molten steel flow rate per unit opening area Q/S is set to be 20 ((ton/min)/m²) or more and 750 ((ton/min)/m²) or less. The molten steel flow rate Q (ton/min) is the flow rate of the molten steel poured into the tundish 2 through the nozzle 1. The molten steel flow rate per unit opening area Q/S is determined by dividing the molten steel flow rate Q (ton/min) by the total area S (m²). When the molten steel flow rate per unit opening area Q/S ((ton/min)/m²) is less than 20 ((ton/min)/m²), the flow velocity of the molten steel discharged from the bottom opening 5 and side openings 6 increases. This is unpreferable because the surface flow velocity increases accordingly and slag inclusion may occur. When the molten steel flow rate per unit opening area Q/S ((ton/min)/m²) exceeds 750, the upward flow velocity within the tundish 2, i.e., the flow velocity of the molten steel that acts to stir the molten steel within the tundish 2, decreases. This is unpreferable because the slag in the molten steel does not easily float upward.

A dam 7 is disposed at a projection position P where the nozzle 1 is projected onto the bottom 4 of the tundish 2 with respect to the height direction, that is, disposed below the nozzle 1 in the height direction. The dam 7 is configured to receive the discharge flow of the molten steel from the nozzle 1 to generate a reverse flow such that the reverse flow and the discharge flow collide with each other. Therefore, the dam 7 is configured such that the kinetic energy of the reverse flow decreases. Moreover, in the dam 7, the discharge flow and the reverse flow collide with each other to generate a fluid flow of the molten steel with kinetic energy lower than that of the reverse flow, and this fluid flow stirs the molten steel in the tundish 2 to facilitate the floating movement of the slag in the molten steel.

As shown in Fig. 1, the dam 7 is formed into a box shape or a closed-end cylindrical shape. The dam 7 includes: a wall portion 8 formed so as to surround the projection position P of the nozzle 1 with a predetermined spacing between the wall portion 8 and the projection position P; and an overhang 9 provided at an upper end portion of the wall portion 8 and protruding toward the inner side of the dam 7. The wall portion 8 may be formed so as to continuously surround the entire circumference of the projection position P or may be formed discontinuously at prescribed intervals around the projection position P. The distance between the projection position P and the wall portion 8 and the height of the wall portion 8 can be determined in advance through experiments or simulations. By appropriately setting the shape and dimensions of the dam 7, the flow of the molten steel within the tundish 2 can be made laminar, so that the floating movement of inclusions can be facilitated.

The overhang 9 extends substantially horizontally from the upper portion of the wall portion 8 toward the inner side of the dam 7. If the overhang 9 is excessively short, the upward flow of the molten steel from side portions of the tundish cannot be suppressed, and the molten steel surface around the nozzle 1 is roughened. In this case, it is feared that the slag floating on the surface of the tundish 2 may be entrained into the molten steel. If the overhang 9 is excessively long, it is feared that the reverse flow may cause breakage of the overhang 9 during operation. The appropriate length of the overhang 9 in the horizontal direction can be determined in advance through experiments or simulations.

### (Operations and effects)

The operations and effects of the present embodiment will be described. The molten steel in the ladle flows into the nozzle 1. Since the nozzle 1 in the present embodiment communicates along the central axis direction, the molten steel is poured into the tundish 2 through the bottom opening 5 and the side openings 6 without staying in the immersion portion 3. Therefore, it is unlikely that large ferrostatic pressure caused by the molten steel staying in the nozzle 1 will act on the nozzle 1. Moreover, it is possible to prevent the molten steel from accumulating in the nozzle 1, so that large ferrostatic pressure does not act on the nozzle 1. Therefore, in the present embodiment, it is possible to prevent the occurrence of operational problems such as damage to or breakage of the nozzle 1 due to large ferrostatic pressure acting on the nozzle 1 and contamination of the molten steel with fragments of the nozzle 1. It is also possible to prevent deterioration in the yield of the molten steel due to these problems.

The molten steel flowing into the nozzle 1 is discharged in a dispersed manner through the bottom opening 5 and the side openings 6. Since the discharge angles of the molten steel from the openings 5 and 6 are set within the above-described ranges, the increase in the surface flow velocity caused by the discharge flow of the molten steel can be mitigated. Moreover, since the total area S (m²) of the openings 5 and 6 and the molten steel flow rate per unit opening area ((ton/min)/m²) are set within the ranges described above, the flow velocity of the discharge flow is prevented from becoming excessively large or small. Specifically, while the increase in the surface flow velocity of the molten steel in the tundish 2 due to the discharge flow is mitigated, the stirred state of the molten steel within the tundish 2 can be maintained. Therefore, slag inclusion is reduced, and high cleanliness steel can be produced. The method for producing steel using the nozzle 1 described above corresponds to a continuous casting method in the present embodiment.

More specifically, in the present embodiment, the molten steel discharged from the bottom opening 5 and the side openings 6 collides with the bottom and wall portion 8 of the dam 7, and a reverse flow is generated. However, since the molten steel is continuously discharged from the nozzle 1, the molten steel discharged from the nozzle 1 continuously collides with the reverse flow. The discharge flow of the molten steel from nozzle 1 and the reverse flow counteract each other, and the kinetic energy of the reverse flow is thereby reduced. Although the reverse flow with high kinetic energy rises along the wall portion of the dam 7, its flow direction is changed to a substantially horizontal direction by the overhang 9, and the resulting flow collides with the discharge flow described above, so that its kinetic energy is reduced. Based on this principle, the kinetic energy of the molten steel overflowing from the dam 7 is reduced, and the tundish 2 is filled with the molten steel flowing with low kinetic energy.

Therefore, the flow state of the molten steel in the tundish 2 is maintained, and the molten steel in the tundish 2 is in an appropriately stirred state. The floating movement of the slag in the molten steel can thereby be facilitated. Since the kinetic energy of the molten steel is reduced as described above, the increase in the surface flow velocity caused by the fluid flow of the molten steel in the tundish 2 can be mitigated. Therefore, slag inclusion can be reduced. This allows the production of high-cleanliness steel.

The present invention is not limited to the embodiment described above. In the embodiment described above, two side openings 6 are formed at equal intervals in the immersion portion 3. However, one or three or more side openings may be formed. For example, when three or more side openings are formed and the total area S (m²) is set within the above-described range, the opening area of each side opening is smaller than that when the number of side openings is two, and the flow velocity of the molten steel discharged from each side opening is larger. However, since the molten steel is discharged in a dispersed manner from the side openings, the increase in surface flow velocity can be mitigated, and slag inclusion can be reduced. Moreover, the molten steel in the tundish can be stirred by the molten steel discharged from each side opening, so that the floating movement of the slag can be facilitated, as in the embodiment described above. Specifically, the same operations and effects as those in the above embodiment can be obtained.

### EXAMPLE 1

Examples performed to examine the effects of the nozzle in the embodiment of the invention will be described.

### (Inventive Example 1)

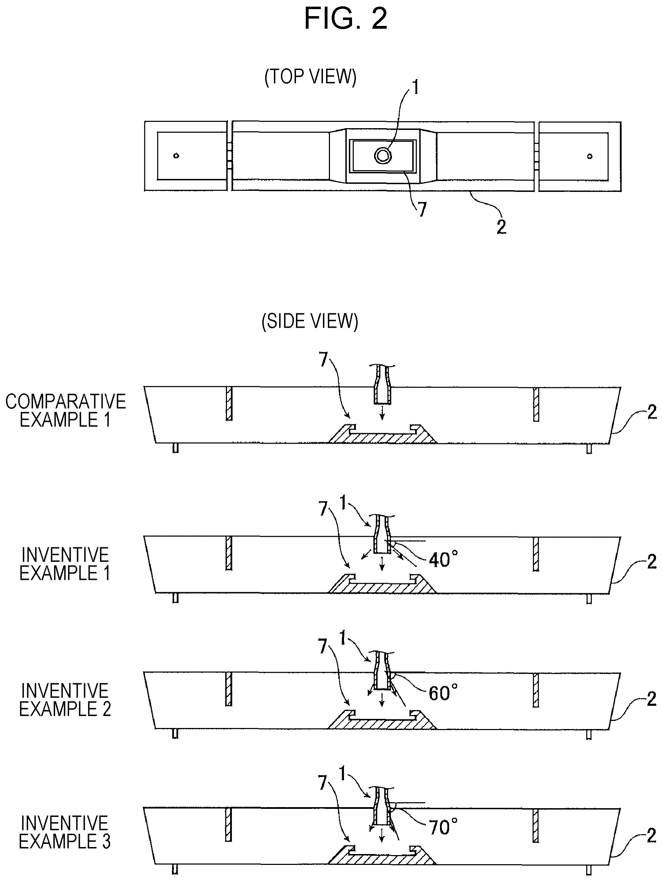

Fig. 2 shows summarized illustrations of nozzles used in Example 1. As shown in Fig. 2, in Inventive Example 1, side openings were formed in the immersion portion of a conventionally known nozzle so as to be inclined downward at an angle of about 40° with respect to the horizontal. Two side openings arranged at equal intervals in the circumferential direction were formed in the immersion portion. The total area S (m²) of the opening area of the bottom opening and the opening area of the side openings was set within the range of 0.02 m² or more and 0.15 m² or less. The distance between the lower end of each side opening and the lower end of the nozzle in the height direction was set to 30 mm.

The depth of the tundish was 1000 mm, and the distance between the fluid level of the molten steel stored in the tundish and the lower end of the nozzle in the height direction was set to 300 mm. The nozzle described above was used to pour the molten steel into the tundish at 8 ton/min, 10 ton/min, and 12 ton/min. Then the surface flow velocity of the molten steel in the tundish was measured at each flow rate. A dam having the same structure as that of the dam 7 shown in Fig. 1 had been placed on the bottom of the tundish.

### (Inventive Example 2)

In Inventive Example 2, the surface flow velocity of the molten steel in the tundish was measured using the same procedure as in Inventive Example 1 except that the side openings were formed so as to be inclined downward at an angle of 60° with respect to the horizontal as shown in Fig. 2.

### (Inventive Example 3)

In Inventive Example 3, the surface flow velocity of the molten steel in the tundish was measured using the same procedure as in Inventive Example 1 except that the side openings were formed so as to be inclined downward at an angle of 70° with respect to the horizontal as shown in Fig. 2.

### (Comparative Example 1)

In Comparative Example 1, the surface flow velocity of the molten steel in the tundish was measured using the same procedure as in Inventive Example 1 except that a conventionally known nozzle was used as shown in Fig. 2.

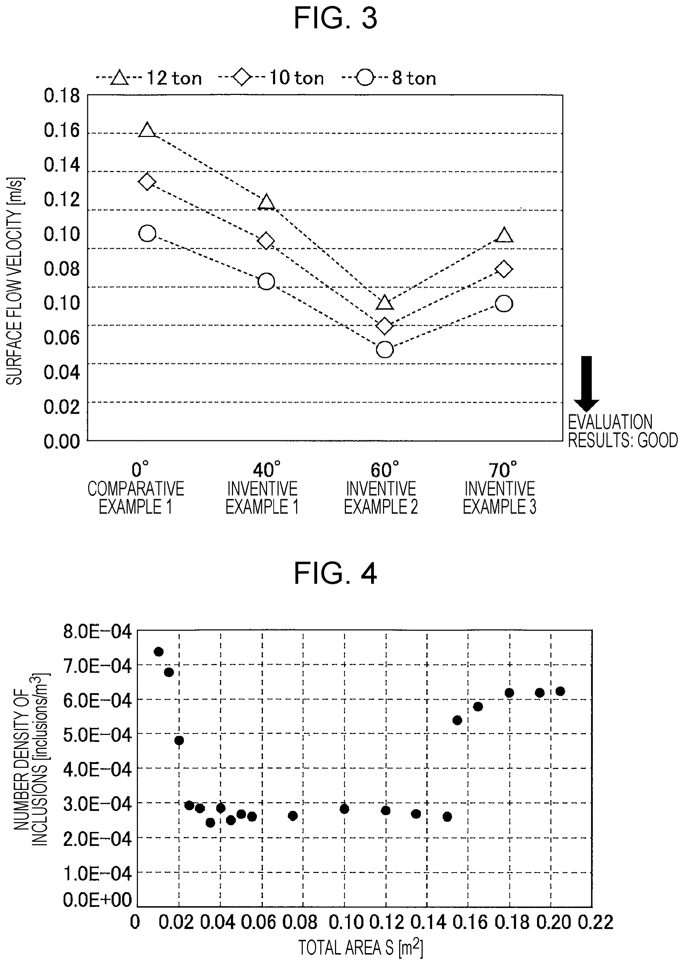

The results of the measurement of the maximum surface flow velocity (hereinafter referred to simply as the surface flow velocity) in Inventive Examples 1 to 3 and Comparative Example 1 are summarized in Fig. 3. As shown in in Fig. 3, in Inventive Example 1, when the molten steel pouring amount was 8 ton/min, the surface flow velocity was lower than that in the Comparative Example. Similarly, when the molten steel pouring amount was 10 ton/min and also 12 ton/min, the surface flow velocity was lower than that in the Comparative Example. This may be because of the following reasons. First, since the molten steel was discharged from the side openings, the flow velocity of the molten steel discharged from the bottom opening could be reduced accordingly, and therefore the increase in the surface flow velocity due to the reverse flow could be mitigated. Second, the molten steel was discharged downward with respect to the horizontal from the side openings.

As shown in Fig. 3, in Inventive Example 3, when the molten steel pouring amount was 8 ton/min, the surface flow velocity was smaller than those in the Comparative Example and Inventive Example 1 but was larger than that in Inventive Example 2. Similarly, when the molten steel pouring amount was 10 ton/min and also 12 ton/min, the surface flow velocity was smaller than those in the Comparative Example and Inventive Example 1 but was larger than that in Inventive Example 2. This may be because of the following reason. In Inventive Example 3, since the molten steel was discharged from the side openings downward at a steeper angle than in Inventive Example 1, the flow velocity of the reverse flow was large than that in Inventive Example 1.

As shown in Fig. 3, in Inventive Example 2, when the molten steel pouring amount was 8 ton/min, the surface flow velocity was lower than those in the Comparative Example and Inventive Examples 1 and 3. Similarly, when the molten steel pouring amount was 10 ton/min and also 12 ton/min, the surface flow velocity was smaller than those in the Comparative Example and Inventive Examples 1 and 3. This may be because of the following reason. In Inventive Example 2, the discharge flow from the side openings and bottom opening and the reverse flow could counteract each other more effectively than in the Inventive Examples 1 and 3, and therefore the increase in the surface flow velocity due to the reverse flow could be mitigated.

As can be seen from the results shown in Fig. 3, when the angle described above is less than 40° or more than 70°, the surface flow velocity increases, potentially causing slag inclusion. Therefore, in the present invention, the angle described above is set to be preferably 40° or more and 70° or less and more preferably about 60°.

### EXAMPLE 2

Next, the relation between the total area S (m²) of the nozzle in the present embodiment and the number density of inclusions (slag) (inclusions/m³) in a slab produced using a continuous casting apparatus using the nozzle was examined. Specifically, first, conventionally known nozzles were prepared, and side openings inclined downward at an angle of 60° with respect to the horizontal were formed in an immersion portion of each nozzle. More specifically, two side openings arranged at equal intervals in the circumferential direction were formed in the immersion portion. While the opening areas of the bottom openings were kept constant, the opening diameters of the side openings were changed to change their opening areas, so that the total areas S (m²) were changed. This is to prevent large ferrostatic pressure from acting on the lower end portion of each nozzle in the height direction.

The distance between the lower end of each nozzle and the lower ends of the side openings in the height direction was set to 30 mm. The depth of the tundish was 1000 mm, and the distance between the fluid level of the molten steel stored in the tundish in the height direction and the lower end of the nozzle was set to 300 mm. A dam having the same structure as the dam 7 shown in Fig. 1 had been disposed on the bottom of the tundish.

One of the nozzles described above was used to pour molten steel into the tundish. Then continuous casting was performed to produce a slab. The number of inclusions with a particle size of 10 µm or more in the slab was counted, and its number density (inclusions/m³) was computed.

Fig. 4 is a graph showing the relation between the total area S (m²) and the number density of inclusions (inclusions/m³) in the slab. As shown in Fig. 4, when the total area S (m²) was less than 0.02 m², the number density (inclusions/m³) was larger than that when the total area S (m²) was 0.02 m² or more. This may be because of the following reason. When the total area S (m²) is small, the flow velocity of the molten steel discharged from the nozzle is large. This causes the surface flow velocity to increase, and slag inclusion occurs.

When the total area S (m²) was larger than 0.15 m², the number density (inclusions/m³) was larger than that when the total area S (m²) was 0.15 m² or less. This may be because of the following reason. When the total area S (m²) is large, the flow velocity of the molten steel discharged from the nozzle decreases, and this suppresses the fluid flow-induced stirring of the molten steel in the tundish 2. Therefore, the slag does not easily float and stays within the molten steel.

It was therefore found that, by setting the total area S (m²) in the range of 0.02 m² or more and 0.15 m² or less, the number density of inclusions (inclusions/m³) in the slab can be significantly reduced, as shown in Fig. 4.

### EXAMPLE 3

The relation between the molten steel flow rate per unit opening area Q/S ((ton/min)/m²) and the number density of inclusions in a slab was examined. First, conventionally known nozzles were prepared, and side openings inclined downward at an angle of 60° with respect to the horizontal were formed in an immersion portion of each nozzle. Specifically, two side openings arranged at equal intervals in the circumferential direction were formed in the immersion portion. While the opening areas of the bottom openings were kept constant, the opening areas of the side openings were changed to change the total areas S (m²). In this manner, the molten steel pouring amount was changed.

The distance between the lower end of each nozzle and the lower ends of the side openings in the height direction was set to 30 mm. The depth of the tundish was 1000 mm, and the distance between the fluid level of the molten steel stored in the tundish in the height direction and the lower end of the nozzle was set to 300 mm. A dam having the same structure as the dam 7 shown in Fig. 1 had been disposed on the bottom of the tundish.

One of the nozzles described above was used to pour molten steel into the tundish. Then continuous casting was performed to produce a slab. The number of inclusions with a particle size of 10 µm or more in the slab was counted, and its number density (inclusions/m³) was computed.

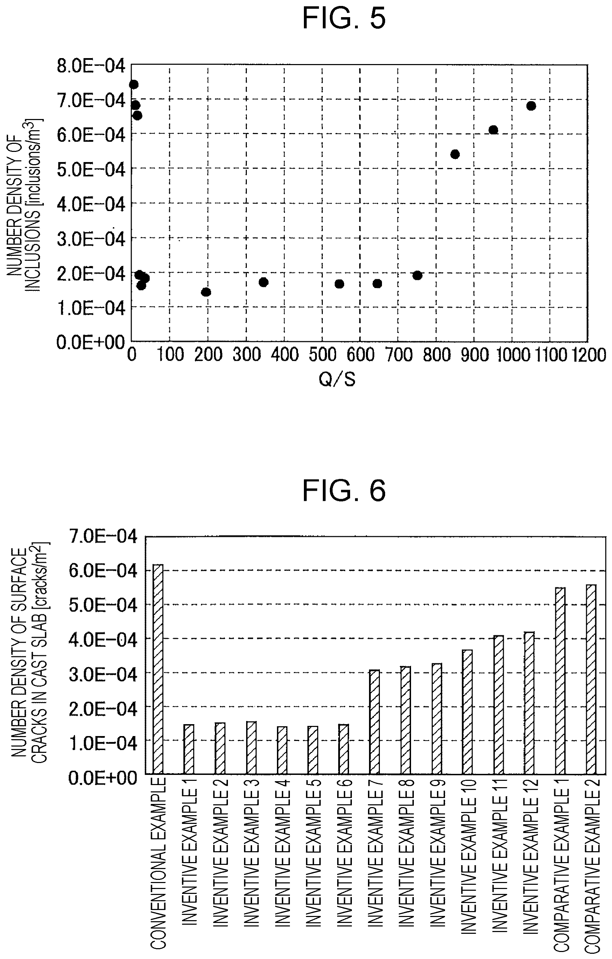

Fig. 5 is a graph showing the relation between the molten steel flow rate per unit opening area Q/S ((ton/min)/m²) and the number density of inclusions in the slab. As shown in Fig. 5, when the molten steel flow rate per unit opening area Q/S ((ton/min)/m²) was less than 20 ((ton/min)/m²), the number density of inclusions (inclusions/m³) was larger than that when the molten steel flow rate per unit opening area Q/S was 20 ((ton/min)/m²) or more. This may be because of the following reason. When the molten steel flow rate per unit opening area Q/S ((ton/min)/m²) is small, the flow velocity of the molten steel discharged from the nozzle is large. This causes the surface flow velocity to increase, and slag inclusion occurs.

When the molten steel flow rate per unit opening area Q/S ((ton/min)/m²) was larger than 750 ((ton/min)/m²), the number density of inclusions (inclusions/m³) was larger than that when the molten steel flow rate per unit opening area Q/S was 750 ((ton/min)/m²) or less. This may be because of the following reason. When the molten steel flow rate per unit opening area Q/S ((ton/min)/m²) is large, the flow velocity of the molten steel discharged from the nozzle is small, and this suppresses the fluid flow-induced stirring of the molten steel in the tundish 2. Therefore, the slag does not easily float and stays within the molten steel.

Therefore, the molten steel flow rate per unit opening area Q/S ((ton/min)/m²) is set in the range of 50 ((ton/min)/m²) or more and 750 ((ton/min)/m²) or less, as shown in Fig. 5**.** In this manner, the number density of inclusions (inclusions/m³) in the slab was found to be significantly reduced.

### EXAMPLE 4

A cast slab was produced using the nozzle in the embodiment of the invention, and the number density of cracks (cracks/m²) on the surface of the cast slab was examined. The test conditions in Example 4 are summarized in Table 1. A Conventional Example in Table 1 is an example in which continuous casting was performed using a conventionally known long nozzle. In Example 4, molten steel subjected to oxygen blowing in a converter and to RH vacuum degassing treatment was used. The number density of cracks (cracks/m²) on the surface of the cast slab is the number of cracks on the surface of the cast slab per unit area.

**[Table 1]**

| | S[m²] | Q[ton/min] | Q/S | Downward angle of side openings [°] | Presence of Dam |
|---|---|---|---|---|---|
| Conventional Example | 0.18 | 2 | 11.1 | - | No |
| Inventive Example 1 | 0.05 | 10 | 200.0 | 40 | Yes |
| Inventive Example 2 | 0.07 | 5 | 71.4 | 20 | Yes |
| Inventive Example 3 | 0.13 | 2 | 15.4 | 45 | Yes |
| Inventive Example 4 | 0.14 | 6 | 42.9 | 60 | Yes |
| Inventive Example 5 | 0.10 | 8 | 80.0 | 60 | Yes |
| Inventive Example 6 | 0.06 | 15 | 250.0 | 80 | Yes |
| Inventive Example 7 | 0.02 | 18 | 900.0 | 60 | Yes |
| Inventive Example 8 | 0.15 | 2 | 13.3 | 30 | Yes |
| Inventive Example 9 | 0.06 | 15 | 250.0 | 70 | No |
| Inventive Example 10 | 0.10 | 10 | 100.0 | 80 | No |
| Inventive Example 11 | 0.02 | 18 | 900.0 | 60 | No |
| Inventive Example 12 | 0.15 | 2 | 13.3 | 30 | No |
| Comparative Example 1 | 0.01 | 10 | 1000.0 | 45 | No |
| Comparative Example 2 | 0.16 | 10 | 62.5 | 60 | No |

Fig. 6 is a graph showing the number density of cracks (cracks/m²) on the surface of the cast slab produced using the nozzle according to the embodiment of the invention. As shown in Fig. 6, in Inventive Examples 1 to 12, the number density of cracks (cracks/m²) on the surface of the cast slab was smaller than those in Conventional Example and Comparative Examples 1 and 2. In Inventive Examples 1 to 6, the total area S and the molten steel flow rate per unit opening area Q/S were set within the numerical ranges described above, and the dam was disposed in the tundish. This may be the reason that the number density of cracks (cracks/m²) on the surface of the cast slab was smaller than those in Inventive Examples 7 to 12, the Conventional Example, and Comparative Examples 1 and 2.

In Inventive Example 2, although the discharge angle from the side openings 6 was small, the molten steel pouring amount Q was small. Therefore, slag inclusion was unlikely to occur, and this may be the reason that the number density of cracks (cracks/m²) on the surface of the cast slab was small. In Inventive Example 6, although the discharge angle from the side openings 6 was large, the discharge flow of the molten steel was received by the dam. Therefore, slag inclusion was unlikely to occur, and this may be the reason that the number density of cracks (cracks/m²) on the surface of the cast slab was small.

In Inventive Examples 7 and 8, the molten steel flow rate per unit opening area Q/S was set outside the numerical range described above. This may be the reason that the number density of cracks (cracks/m²) on the surface of the cast slab was larger than those in Inventive Examples 1 to 6. In Inventive Examples 9 and 10, no dam was provided in the tundish, and the discharge angle from the side openings 6 was set outside the numerical range described above. This may be the reason that the number density of cracks (cracks/m²) on the surface of the cast slab was larger than those in Inventive Examples 1 to 6. In Inventive Examples 11 and 12, the molten steel flow rate per unit opening area Q/S was set outside the numerical range described above, and no dam was provided in the tundish. This may be the reason that the number density of cracks (cracks/m²) on the surface of the cast slab was larger than those in Inventive Examples 1 to 6. In Inventive Example 11, the discharge angle from the side openings 6 was set within the numerical range described above. This may be the reason that the number density of cracks (cracks/m²) on the surface of the cast slab was smaller than that in Inventive Example 12.

### Reference Signs List

- 1: nozzle
- 2: tundish
- 3: immersion portion
- 4: bottom of tundish
- 5: bottom opening of nozzle
- 6: side opening of nozzle
- 7: dam
- 8: wall portion
- 9: overhang
- P: projection position

## Claims

1. A nozzle for continuous casting that is used to pour molten steel from a ladle into a tundish, the nozzle comprising:
an immersion portion that is to be immersed into the molten steel in the tundish;
a bottom opening formed in a forward end portion of the immersion portion, the forward end portion being located on a bottom side of the tundish, the bottom opening being configured to discharge the molten steel in a central axis direction of the immersion portion; and
at least one side opening formed on a side surface of the immersion portion,
wherein the side opening is formed so as to be inclined downward at a predetermined angle with respect to a horizontal plane at 0°, and
wherein a total area S of an opening area of the bottom opening and an opening area of the side opening is 0.02 m² or more and 0.15 m² or less.

2. The nozzle for continuous casting according to claim 1, wherein the predetermined angle is 40° or more and 70° or less with respect to the horizontal plane.

3. The nozzle for continuous casting according to claim 1, wherein the immersion portion is formed into a cylindrical shape, and
wherein the at least one side opening includes two side openings formed at equal intervals in a circumferential direction of the immersion portion.

4. A continuous casting apparatus comprising the nozzle for continuous casting according to any one of claims 1 to 3,
wherein the continuous casting apparatus further comprises a dam disposed at a projection position where the bottom opening is projected onto a bottom of the tundish with respect to a height direction of the tundish, and
wherein the dam includes a wall portion surrounding the projection position with a predetermined spacing between the wall portion and the projection position and an overhang provided in an upper end portion of the wall portion and protruding toward an inner side of the dam.

5. A tundish into which molten steel is to be poured through the nozzle for continuous casting according to any one of claims 1 to 3, the tundish comprising a dam disposed at a projection position where the bottom opening is projected onto a bottom of the tundish with respect to a height direction,
wherein the dam includes a wall portion surrounding the projection position with a predetermined spacing between the wall portion and the projection position and an overhang provided in an upper end portion of the wall portion and protruding toward an inner side of the dam.

6. A continuous casting method for producing steel using the nozzle for continuous casting according to any one of claims 1 to 3.

7. The continuous casting method according to claim 6, wherein a molten steel pouring amount per unit opening area Q/S that is obtained by dividing the molten steel pouring amount Q from the ladle to the tundish by the total area S is 20 (ton/min)/m² or more and 750 (ton/min)/m² or less.
